# EUROPEAN PATENT SPECIFICATION

(11) **EP 1 241 904 B1**
(45) Date of publication and mention of the grant of the patent: **02.01.2004**
(21) Application number: 01440063.4
(22) Date of filing: 12.03.2001
(51) Int. Cl.: H04Q 7/26

(54) **Resource management in a wireless corporate communication system**
Ressourcenverwaltung in einem drahtlosen Betriebskommunikationssystem
Gestion de ressources dans un système de communications d'entreprise sans fil

(43) Date of publication of application: 18.09.2002
(73) Proprietor: ALCATEL, 75008 Paris (FR)
(72) Inventor: De Loye, Martin, 92310 Sevres (FR); Deprun, Jean-Francois, 75010 Paris (FR)
(74) Representative: Urlichs, Stefan, Dipl.-Phys.

(56) References cited:
- EP-A- 0 766 427
- WO-A-96/35309
- US-A- 5 420 909
- US-A- 5 839 067
- US-A- 5 999 813

## Description

### Background of the Invention

The present invention relates to a wireless corporate communication system and more precisely to resource management in such a wireless corporate communication system.

Usual wireless corporate communication systems allocate a predefined amount of resources on the radio interface for any call to be established. Usually, this amount of resources correspond to one voice channel in case of a voice call or one data channel supporting the required bit rate in case of a data call. This resource allocation is performed once at call setup.

US patent 5,420,909 discloses such a wireless corporate communication system comprising a communication resource allocator and a telephone resource allocator. Upon request for a communication the resource allocators check if a resource (telephone line resp. broadcast unit) is still available. If it is the case it allocates this resource for the communication.

Also US patent 5,839,067 discloses a corporate communication system with a mobility server which manages all calls to and from the mobile telephones. The mobility server checks the services requested from a mobile telephone. If these match a service profile associated to the mobile telephone, the mobility server initiates the call set up of the requested outgoing call.

Moreover, calls entering the wireless corporate communication system coming from a public communication network are allocated the same amount of resources in the wireless corporate communication system as in the public communication network. In this case, the resource allocation is transparent for the wireless communication network.

A drawback of this solution is that resources allocated on the radio interface of the wireless corporate communication system do not exactly suit the requirements of the corporate radio terminals belonging to the wireless communication system. Indeed, the needs of a corporate radio terminal may vary during a communication while the resource allocated remains constant. This results in a poorly optimized load on the radio interface of the wireless corporate communication system.

Another drawback is that the transparent allocation of resources for calls entering the wireless corporate communication system and coming from a public communication network is not optimized. Indeed, more resource may be available in the corporate network than in the public network or on the contrary the amount of resources allocated in the public communication network may be higher than the resources available in the corporate communication system due to internal traffic in the corporate communication system.

A particular object of the present invention is to provide a wireless communication system allocating available resources to corporate radio terminals under the range of a base station coupled with a private branch exchange better taking into account the real needs of the corporate radio terminals.

Another object of the invention is to provide a private branch exchange to be used in a wireless corporate communication system as mentioned above.

### Summary of the Invention

These objects, and others that appear below, are achieved by a wireless corporate communication system according to claim 1, a private branch exchange according to claim 2, and a base station adapted to be coupled to a private branch exchange according to claim 7.

According to the present invention, the private branch exchange part of the wireless corporate communication system comprises means for controlling the amount of resources allocated to a corporate terminal under the range of a base station coupled with the private branch exchange.

A wireless corporate communication system, according to the present invention, has the advantage to allocate more accurately available resources since a private branch exchange has a much better knowledge of the needs of a corporate radio terminal than a public exchange would have.

Another advantage of a wireless corporate communication system according to the present invention is to better share the resources between the corporate communication system internal and external traffics.

Further advantageous features of the invention are defined in the dependent claims.

### Brief Description of the Drawings

Other characteristics and advantages of the invention will appear on reading the following description of a preferred implementation given by way of non-limiting illustrations, and from the accompanying drawings, in which:
- Figure 1 shows a wireless corporate communication system according to the present invention;
- Figure 2 shows a private branch exchange according to the present invention.

### Detailed Description of the Invention

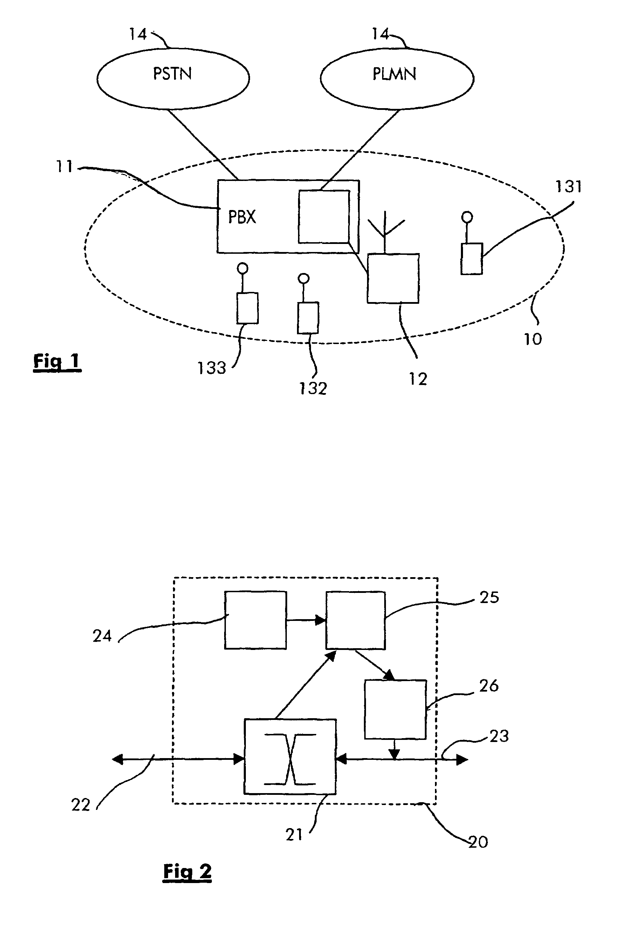

Figure 1 shows a wireless corporate communication system 10 according to the present invention. Wireless corporate communication system comprises a private branch exchange 11, a base station 12 coupled with private branch exchange 11 and corporate radio terminals 131, 132, 133 under the range of base station 12.

Wireless corporate communication system may be more complex in that it may comprise several base stations and/or several private branch exchanges. Preferably, a module for interfacing private branch exchange 1 with base station 12 is required. This further module may be considered as integrated to private branch exchange 11. In this case, base station 12 may be a base station adapted to be used in a public radio communication network.

For sake of simplicity, the invention will be explained by means of wireless corporate communication system as illustrated on Figure 1. Private branch exchange 11 is interconnected with a public communication network 14. Public communication network 14 may be a fixed or a wireless one e.g. PSTN, ISDN, GSM, GPRS, UMTS. This list is not exhaustive.

Preferably, wireless communication system 10 is adapted to deal with packet mode communication. In this case, resource allocation is a crucial function of the system. However, this invention may also be applied to circuit oriented communication as for example HSCSD (High Speed Switched Circuit Data) applied to a wireless corporate communication system where up to eight radio channels can be simultaneously allocated to one single user.

According to the present invention, private branch exchange 11 comprises a resource allocation module responsible for controlling the amount of resources allocated to the corporate radio terminals 131, ..., 133. For this purpose, private branch exchange 11 transmits a message to base station 12 indicating the amount of resources allocated to each new corporate radio terminal 131, ..., 133 setting up a new connection (in-band resource allocation). On its turn, base station 12 forwards this messages to corporate radio terminals 131, ..., 133 indicating to each of them the amount of resources they are allocated.

The term resource should be understood as the bandwidth allocated to a corporate radio terminal 131, ..., 133 to communicate over the air interface. Then, the term resource may be a number of time slots allocated in a TDMA (Time Division Multiple Access) frame or the number of switched circuits allocated simultaneously to a corporate radio terminal. Actually, the meaning of the term resources depends on the type of transmission on the air interface (e.g. TDMA/FDMA/CDMA as well as packet or circuit switched transmission).

Preferably, the resource allocation is dynamically updated i.e. the amount of resources allocated to a corporate radio terminal 131, ..., 133 can be increased or decreased at the initiative of private branch exchange 11 during a communication.

Alternatively, the resource allocation may also be controlled by means of a common channel to which each of the corporate radio terminal 131, ..., 133 has access (out-band resource allocation). This solution would be especially well adapted to TDMA transmission mode in wireless corporate communication system 10. The common channel could be divided in slots, each slot indicating the identity of the corporate radio terminal 131, ..., 133 that is allowed to transmit a packet in the next time slot. In this case, base station 12 fills the common channel with the indications contained in the messages received from private branch exchange 11.

Other usual methods for indicating to the corporate radio terminals how many resources they are allocated could also be used in the framework of the present invention.

In a preferred embodiment, different amount of resources may be allocated to a corporate radio terminal on the uplink (i.e. from the corporate radio terminal to the base station) and on the downlink (i.e. from the base station to the corporate radio terminal). Then, private branch exchange 11 should perform parallel computation of the amount of resources to be allocated in the two directions of communication.

In a further embodiment of the invention, resources can be allocated to a non-corporate radio terminal (i.e. not belonging to the wireless corporate communication system) located under the range of the base station 12 to enable access for this radio terminal to public communication network 14. In this case, a predefined default amount of resources should be allocated and this call is transparently routed to public communication network 14 through private branch exchange 11.

Private branch exchange 11 is responsible for calculating the amount of resources that should be allocated to the different corporate radio terminals.

Several embodiments for calculating the amount of resources will be presented in the following.

Figure 2 shows a private branch exchange 20 according to the present invention. Private branch exchange 20 comprises a switch 21, an interface 22 to public communication network 14, an interface 23 to base station 12, a profile data base 24, a module for allocating resources 25 and a module for sending messages 26 indicating the amount of allocated resources.

Interface 22 is connected to switch 21 which is connected to interface 23. This is the structure of usual private branch exchange as known in the art. Switch 21 comprises the switching matrix as well as protocol conversion modules if the protocols used on both interfaces 22, 23 are different (e.g. GSM on interface 22 and DECT on interface 23 or GPRS on interface 22 and HSCSD on interface 23). Alternatively, switch 21 can be replaced by an IP router if the wireless communication system is based on the internet protocol.

According to the present invention, profile data base 24 comprises an entry for each of the corporate radio terminals belonging to the wireless corporate communication system. An entry may comprise fields such as the type of terminal (e.g. telephone, fax, computer), the type of data this terminal supports (e.g. voice, real-time data, packetized data...), the priority this terminal is given in the system (e.g. high priority for voice and real time data, a lower priority for packetized data).

The profile of a user may be very detailed. For example, the type of data and the priority of data may depend from the time. Then, if a data consolidation has to run at a predefined time of the day, the priority of these data may be very high at this time. Some other similar dependencies may be stored in the profile database 24.

This is made possible since a private branch exchange has a more precise knowledge of the corporate communication system than a Home Location Register storing the users profile in a public radio communication network would have from a user.

This profile data base 24 is connected to module 25 for allocating resources. This module manages the available resources (e.g. bandwidth, number of time slots,...) according to the needs of the different corporate radio terminals willing to communicate in the wireless corporate communication system. Module 25 for allocating resources runs an algorithm that determines the amount of resources to be allocated to a corporate user depends on the profile of this user stored in the profile database.

Preferably, the effective amount of data destined to a user received from a public communication network on interface 22 should also be taken into account in the algorithm for allocating resources in module 25. This effective amount of data can be observed at switch 21 and accessed by module 25. Indeed, even if the resources allocated in the wireless corporate communication system is very high, a bottleneck in the public communication network may result in very few data to be received on this interface (this would for example occur when downloading a file from the Internet at a corporate radio terminal). In such a case, module 25 for allocating resources may reduce the allocated resources to this corporate radio terminal until the amount of resources coming from the public communication network increases.

A similar problem also occurs in case of access to an intranet server or to any shared server that may be simultaneously accessed by several corporate radio terminals causing delay in the communication.

Another criterion for allocating resources could be the load in the private branch exchange. This load can be determined by observing the traffic at switch 21. When the traffic at the private branch exchange is low, more resources could be allocated to a corporate radio terminal trying to setup a connection than when the private branch exchange is very loaded.

Once the amount of resources to be allocated to a corporate radio terminal has been calculated at module 25, a message containing an identifier of the corporate radio terminal and the corresponding amount of resources is generated at module 26 and sent on interface 23 to the base station under the range of which the corporate radio terminal is located. On its turn, the base station sends messages to the corporate radio terminals indicating to each of them the amount of resources they are allocated.

## Claims

1. Wireless corporate communication system (10) comprising a private branch exchange (11 ), at least one base station (12) coupled with said private branch exchange (11), and a plurality of corporate radio terminals (131, 132, 133) under the range of said base station (12), said corporate communication system (10) being **characterized in that**:
- said private branch exchange comprises means for controlling the amount of resources (25) allocated to each of said corporate radio terminals (131, 132, 133);
- said base station (12) comprising means for indicating to said corporate radio terminals (131, 132, 133) the amount of resources they are allocated.

2. Private branch exchange (20) adapted to be coupled to a base station (12), said private branch exchange (20) comprising a switch (21) establishing communications to/from corporate radio terminals located under the range of said base station, said private branch exchange (11) being **characterized in that** it comprises:
- means (25) for controlling the amount of resources allocated to each of said corporate radio terminals;
- means (26) for sending messages to said base station comprising the amount of resources allocated to each of said corporate radio terminal.

3. Private branch exchange (20) according to claim 2, **characterized in that** said private branch exchange further comprises a database (24) storing user profiles of said corporate radio terminals; said amount of resources allocated to a corporate radio terminal depending on the profile of said corporate radio terminal stored in said database.

4. Private branch exchange (20) according to claim 2, **characterized in that** said amount of resources allocated to a corporate radio terminal communicating with a public communication network over said corporate communication system depends on the effective amount of data destined to said corporate radio terminal and received at the interface (22) between said corporate communication system and said public communication network.

5. Private branch exchange (20) according to claim 2, **characterized in that** said amount of resources allocated to a corporate radio terminal depends on the amount of traffic in said private branch exchange.

6. Private branch exchange (20) according to claim 2, **characterized in that** said amount of resources allocated to a corporate radio terminal is dynamically updated during a communication to/from said corporate radio terminal.

7. Base station (12) adapted to be coupled to a private branch exchange (11) **characterized in that** it comprises a module sending messages to corporate radio terminals (131, 132, 133) under the range of said base station (12) indicating the amount of resources each of said corporate radio terminal (131, 132, 133) is allocated, said amount o resources being determined by said private branch exchange (11).

## Patentansprüche

1. Drahtloses Betriebskommunikationssystem (10), das eine Nebenstellenanlage (11), mindestens eine Basisstation (12), die an die Nebenstellenanlage (11) gekoppelt ist, und eine Vielzahl von Betriebsfunk-Endgeräten (131, 132, 133) im Bereich der Basisstation (12) umfasst, wobei das drahtlose Betriebskommunikationssystem (10) **dadurch gekennzeichnet ist, dass**
- Die Nebenstellenanlage Mittel zur Steuerung der Menge von Ressourcen (25), die jedem der Betriebsfunk-Endgeräte (131, 132, 133) zugewiesen werden, umfasst;
- Die Basisstation (12) Mittel umfasst, um den Betriebsfunk-Endgeräten (131, 132, 133) die Menge von Ressourcen anzuzeigen, die ihnen zugewiesen ist.

2. Nebenstellenanlage (20), die so angepasst ist, dass sie an eine Basisstation (12) gekoppelt werden kann, wobei die Nebenstellenanlage (20) eine Koppeleinrichtung (21 ) enthält, die Kommunikationsverbindungen zu/von Betriebsfunk-Endgeräten aufbaut, die sich im Bereich der Basisstation befinden, und wobei die Nebenstellenanlage (11) **dadurch gekennzeichnet ist, dass** sie folgendes umfasst:
- Mittel (25) zur Steuerung der Menge von Ressourcen, die jedem der Betriebsfunk-Endgeräte zugewiesen werden;
- Mittel (26) zum Senden von Nachrichten an die Basisstationen, die die Menge von Ressourcen umfassen, die jedem Betriebsfunk-Endgerät zugewiesen wurden.

3. Nebenstellenanlage (20) gemäß Anspruch 2, **dadurch gekennzeichnet, dass** die Nebenstellenanlage weiterhin eine Datenbank (24) enthält, in der Teilnehmerprofile der Betriebsfunk-Endgeräte gespeichert werden, wobei die Menge von Ressourcen, die einem Betriebsfunk-Endgerät zugewiesen wird, von dem Profil des Betriebsfunk-Endgerätes abhängt, das in der Datenbank gespeichert ist.

4. Nebenstellenanlage (20) gemäß Anspruch 2, **dadurch gekennzeichnet, dass** die Menge von Ressourcen, die einem Betriebsfunk-Endgerät zugewiesen wird, das über das Betriebskommunikationssystem mit einem öffentlichen Kommunikationssystem kommuniziert, von der effektiven Menge von Daten abhängt, die an das Betriebsfunk-Endgerät gerichtet ist und an der Schnittstelle (22) zwischen dem Betriebskommunikationssystem und dem öffentlichen Kommunikationsnetz empfangen wird.

5. Nebenstellenanlage (20) gemäß Anspruch 2, **dadurch gekennzeichnet, dass** die Menge von Ressourcen, die einem Betriebsfunk-Endgerät zugewiesen wird, von der Verkehrsmenge in der Nebenstellenanlage abhängt.

6. Nebenstellenanlage (20) gemäß Anspruch 2, **dadurch gekennzeichnet, dass** die Menge von Ressourcen, die einem Betriebsfunk-Endgerät zugewiesen wird, während einer Kommunikation zu/von dem Betriebsfunk-Endgerät dynamisch aktualisiert wird.

7. Basisstation (12), die so angepasst ist, dass sie an eine Nebenstellenanlage (11) gekoppelt werden kann, **dadurch gekennzeichnet, dass** sie ein Modul umfasst, das Nachrichten an Betriebsfunk-Endgeräte (131, 132, 133) im Bereich der Basisstation (12) sendet, welche die Menge der Ressourcen anzeigen, die jedem der Betriebsfunk-Endgeräte (131, 132, 133) zugewiesen ist, wobei die Menge der Ressourcen durch die Nebenstellenanlage (11 ) bestimmt wird.

## Revendications

1. Système de télécommunications d'entreprise sans fil (10) comprenant un autocommutateur privé (11), au moins une station de base (12) couplée au dit autocommutateur privé (11), et une pluralité de terminaux radioélectriques d'entreprise (131, 132, 133) en vertu de la portée de ladite station de base (12), ledit système de télécommunications d'entreprise (10) étant **caractérisé en ce que** :
ledit autocommutateur privé comprend des moyens pour commander la quantité de ressources (25) attribuées à chacun desdits terminaux radioélectriques d'entreprise (131, 132, 133) ;
ladite station de base (12) comprenant des moyens pour indiquer aux dits terminaux radioélectriques d'entreprise (131, 132, 133) la quantité de ressources qu'ils se voient attribuer.

2. Autocommutateur privé (20) adapté pour être couplé à une station de base (12), ledit autocommutateur privé (20) comprenant un commutateur (21) établissant des communications vers/depuis les terminaux radioélectriques d'entreprise situés en vertu de la portée de ladite station de base, ledit autocommutateur privé (11) étant **caractérisé en ce qu'**il comprend :
des moyens (25) pour commander la quantité de ressources attribuées à chacun desdits terminaux radioélectriques d'entreprise ;
des moyens (26) pour envoyer des messages à ladite station de base comprenant la quantité de ressources attribuées à chacun desdits terminaux radioélectriques d'entreprise.

3. Autocommutateur privé selon la revendication 2, **caractérisé en ce que** ledit autocommutateur privé comprend en outre une base de données (24) stockant des profils d'utilisateurs desdits terminaux radioélectriques d'entreprise ; ladite quantité de ressources attribuées à un terminal radioélectrique d'entreprise dépendant du profil dudit terminal radioélectrique d'entreprise stocké dans ladite base de données.

4. Autocommutateur privé (20) selon la revendication 2, **caractérisé en ce que** ladite quantité de ressources attribuées à un terminal radioélectrique d'entreprise communiquant avec un réseau public de communication sur ledit système de télécommunications d'entreprise dépend de la quantité effective de données destinées au dit terminal radioélectrique d'entreprise et reçues au niveau de l'interface (22) entre ledit système de télécommunications d'entreprise et ledit réseau public de communication.

5. Autocommutateur privé (20) selon la revendication 2, **caractérisé en ce que** ladite quantité de ressources attribuées à un terminal radioélectrique d'entreprise dépend de la quantité de trafic dans ledit autocommutateur privé.

6. Autocommutateur privé (20) selon la revendication 2, **caractérisé en ce que** ladite quantité de ressources attribuées à un terminal radioélectrique d'entreprise est mise à jour de manière dynamique pendant une communication vers/depuis ledit terminal radioélectrique d'entreprise.

7. Station de base (12) adaptée pour être couplée à un autocommutateur privé (11) **caractérisée en ce qu'**elle comprend un module envoyant des messages aux terminaux radioélectriques d'entreprise (131, 132, 133) en vertu de la portée de ladite station de base (12) indiquant la quantité de ressources que chacun desdits terminaux radioélectriques d'entreprise (131, 132, 133) se voit allouer,
ladite quantité de ressources étant déterminée par ledit autocommutateur privé (11).
